# EUROPEAN PATENT SPECIFICATION

(11) **EP 0 440 858 B1**
(45) Date of publication and mention of the grant of the patent: **05.07.1995**
(21) Application number: 90102479.4
(22) Date of filing: 08.02.1990
(51) Int. Cl.: G01N 27/12

(54) **Humidity sensor**
Feuchtigkeitsfühler
Détecteur d'humidité

(43) Date of publication of application: 14.08.1991
(73) Proprietor: MITSUBISHI GAS CHEMICAL COMPANY, INC., Chiyoda-ku, Tokyo (JP)
(72) Inventor: Shimomura, Tadashi, Chiba-ken (JP); Wakabayashi, Hidechika, Chiba-ken (JP); Shigaki, Yasunobu, Tokyo (JP); Arii, Mitsuzo, Tokyo (JP)
(74) Representative: Kraus, Walter, Dr.

(56) References cited:
- EP-A- 0 078 058
- WO-A-85/01222
- US-A- 4 603 372
- PATENT ABSTRACTS OF JAPAN, vol. 8, no. 27 (P-252)[1464], 4th February 1984 ; & JP-A-58 182 546

## Description

The present invention relates to a humidity sensor to detect relative humidity as a change in electric resistance.

Conventionally known as a humidity sensor are sensors which use an electrolytic salt such as lithium chloride, etc., sensors which make use of a film of an organic polymer such as polyamide, polyethylene, etc., and sensors which use a sintered body of metal oxide such as titanium oxide, aluminum oxide, tin oxide, etc. Concerning these sensors, it is generally said that the metal oxide sintered body is chemically and physically more stable than other organic polymer films, etc., and is the most advantageous.

However, the metal oxide sintered body is, in general, porous, and it has a defect that if a substance such as oil, chemical material, or the like is adsorbed in the pores or on the surface of the sintered body, its surface chemical state or pore state changes and the humidity sensing characteristics thereof also change.

In order to solve the above problem, there is proposed a sensor of metal sintered body which takes advantage of the heat resistance of metal oxide sensors and, therefore, has a heating cleaning unit to improve reliability. There is another example of a sensor in which a water-repellent resin or permeable nonwoven fabric is used in a protective case. However, there are problems that humidity stabilization within the case takes time, etc.

On the other hand, in a humidity sensor using an organic polymer film, its humidity sensing material is covered with a protective film in order to prevent various adsorbed substances from deteriorating the humidity sensing characteristics. However, this sensor has a defect that its humidity sensing material film is peeled off due to water droplets formed by dew condensation or water vapor droplets generated from a humidifier, and as a result, the sensor fails to work as such.

Patent Abstracts of Japan, vol. 8, no. 27 (P-252) [1464], 4th February 1984; and JP-A-58-182546 (Hitachi Seisakusho) 25-10-1983 discloses a humidity sensor in which a pair of facing electrodes are formed on an insulating substrate, a humidity-sensing portion formed of a porous metal oxide is provided thereon, and the humidity-sensing portion is covered with a film of an organic polymer. The organic polymer includes PVA, ethyl cellulose, methyl cellulose, acetyl cellulose and hydroxypropyl cellulose.

The above humidity sensor is one of a thin-film type, which is used for preventing dew condensation by accurately and speedily sensing a high humidity of 90% RH or higher on the basis of the fact that the resistance to humidity rapidly changes at a certain humidity.

US-A-4 603 372 discloses a thin film type and dielectric constant-detection type, humidity and temperature sensor having a multi-layered structure, obtained by consecutively forming, on a support such as a glass, etc., a first electrode of a metal, a first layer of an organic polymer film (hydrophobic nature), a second layer of an organic polymer film (hydrophilic nature), a porous thin metal film (second electrode) and a third layer of an organic polymer film. The first layer of an organic polymer film, P1, is a polyurethane film having a thickness of 0.3 »m, the second layer of an organic polymer film, P2, is a layer of cellulose acetate butyrateester having a thickness of 1.4 »m, and the third layer of an organic polymer film, P3, is a polyurethane film having a thickness of a few microns to a few tens microns. P1 works for smoothing an etched support and as an adhesive between the first electrode and P2. P2 works as a humidity-sensing material. P3 works for mechanical protection which facilitates handling of the protected sensor.

The invention of EP-A-0 078 058 is directed to a dew sensor comprising a pair of counterposed electrodes, insulating metal oxide and an organic polymer layer coating these. The invention of EP-A-0 078 058 seeks to provide a dew sensor of direct current type and resistance-lowering type with increasing humidity for quickly and sharply detecting dewing with a sharp decrease in resistance in a RH range of 95 to 100% and quick response of dewing.

EP-A-0 078 058 discloses that the material for the organic polymer layer is selected from cellulose derivatives such as ethyl cellulose, methyl cellulose and acetyl cellulose (page 5, lines 1-3). The invention of EP-A-0 078 058 uses a hydrophilic polymer for obtaining quick response.

It is an object of the present invention to provide an improved humidity sensor of which the humidity sensing characteristics do not change.

It is another object of the present invention to provide an improved humidity sensor which is chemically and physically stable.

It is further another object of the present invention to provide an improved humidity sensor of which the humidity sensing characteristics do not change even under an environment containing water and vapor water droplets, oil and oil steam, organic acids, inorganic corrosive gases, cigarette smokes, aldehydes, etc.

According to the present invention, there is provided a humidity sensor comprising a porous sintered body, electrodes and a film of an organic polymer covering said porous sintered body, which is characterized in that said porous sintered body and electrodes have a polyurethane resin formed on the whole surface and pores thereof.

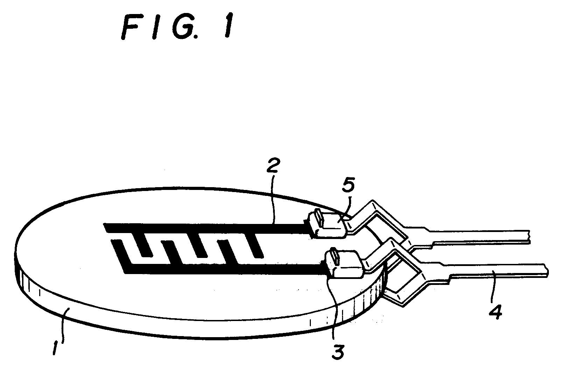

Figure 1 shows a perspective view of a porous ceramic humidity sensor.

The scope of the humidity sensor comprising a porous sintered body and electrodes in the present invention includes both a humidity sensor of which the volume resistance changes with a humidity change and a humidity sensor of which the surface resistance changes with a humidity change.

The porous sintered body usable in the present invention is known per se, and produced by firing a metal compound or its mixture with a metal salt, or the like in air at temperatures to be discussed later. Examples of the metal compound includes oxides such as MgO, TiO₂, ZrO₂, Nb₂O₅, TaO, Ta₂O₅, Cr₂O₃, MoO₃, WO₃, MnO₂, Mn₃O₄, FeO, Fe₂O₃, CoO, Ca₂O₃, NiO, Ni₂O₃, Ni₃O₄, ZnO, Al₂O₃, Ga₂O₃, In₂O₃, Tl₂O₃, SiO₂, GeO₂, SnO, SnO₂, PbO, Sb₂O₃, Bi₂O₃, etc., compound oxides such as Mg₂Fe₂O₄, ZnFe₂O₄, MgAl₂O₄, MgCrO₃, ZnCrO₃ (these compound oxides are spinel), 3Al₂O₃ · 2SiO₂ (Mullite), SiO₂ · MgO, etc., and the like. Among these, TiO₂, γ-Al₂O₃, ZnO, MgO, ZrO₂, NiO, MgAl₂O₄, etc., are particularly desirable. Examples of the above "metal salt, or the like", which is mixed with these metal compounds, include alkali metal salts such as sodium chloride, potassium chloride, etc., alkali metal oxides such as sodium oxide, etc., alkaline earth metal hydroxides such as calcium hydroxide, etc., and the like.

The porous sintered body may be produced according to the following production technique applied to the production of usual ceramics.

First, the components (materials) for the sintered body are weighed out, and then, they are fully mixed in a ball mill, a shaker mill, or the like by a dry method or a wet method using a mixed solvent of water, methyl alcohol, etc. Thereafter, the resultant mixture is dried optionally, calcined at a suitable temperature, and then crushed to obtain a raw material powder. This raw material powder in an ascrushed state may be molded by a dry method, or it may be kneaded with a binder, e.g. polyvinyl alcohol, polyethylene glycol, etc., dried and shaped. This molded body is sintered in air to give a sintered body. In general, the sintered body preferably has a porous structure in which the porosity is 10 to 55 % and the pore diameter is not more than 1 »m. The sintered body used in the present invention can be obtained by setting conditions as follows: the raw material powder has a diameter of 0.1 to 3 »m, the molding pressure is 50 to 1,000 kg/cm², the sintering temperature is 500 to 1,200°C, and the sintering time is 0.5 to 3 hours.

The sintered body obtained as above is polished as required, and then an ordinary paste such as gold paste, platinum paste, ruthenium paste, or the like is applied to form electrodes, whereby a humidity sensor is produced.

The urethane resin is brought into contact with the humidity sensor by immersing the humidity sensor in a solution of a urethane resin, or spraying the humidity sensor with the urethane resin solution, and then drying it. The solvent for the urethane resin do not need to be that which can dissolve the entirety of the resin. That is, even if there is used a solvent which can dissolve the resin only partially, the humidity sensor can be surface-treated by immersing the humidity sensor in the resin-dissolved portion. Typical examples of the solvent are dimethylform-amide, toluene, tetrahydrofuran, etc. The solution concentration is a factor to determine the size and depth of the pores of the treated humidity sensor, and the concentration of the urethane resin is desirably 1 to 5 % by weight in view of the pore state and humidity sensing characteristics. The time for immersing the porous sintered body is desirably not less than 10 seconds, during which the sintered body can be degassed.

The polyurethane resin is a high-molecular compound having a urethane bond in its main chain-constituting unit (or recurring unit), and usually obtained by a reaction between a diisocyanate and polyhydric alcohol.

As the diisocyanate, both aromatic diisyanates and aliphatic diisocyanates are usable. Examples of the diisocyanate include tolylene diisocyanate, 3,3'-bitolylene-4,4'-diisocyanate, diphenylmethane-4,4'-diisocynate, 3,3'-dimethyl-diphenylmethane-4,4'-diisocyanate, m-phenylene diisocyanate, dicyclohexamethane diisocyanate, trimethylene diisocyanate, tetramethylene diisocyanate, pentamethylene diisocyanate, hexamethylene diisocyanate, octamethylene diisocyanate, naphthalene-1,5-diisocyanate, isophorone diisocyanate, etc.

Examples of the polyhydric alcohol include tetramethylene glycol, hexamethylene glycol, octamethylene glycol, cyclohexane glycol, etc., and further, they also include polyethylene glycol, polytetraethylene glycol, polyoxypropylene glycol, polyether glycol such as polyoxypropylene-polyoxyethylene glycol, and polyester glycol typified by a condensate of adipic acid with ethylene glycol. Among these, the polyether glycol is preferably usable.

Figure 1 is a perspective view showing one embodiment of an improved humidity sensor using a porous sintered body, provided by the present invention, in which a disk-shaped porous sintered body 1 has comb-like electrodes 2 bonded thereto by baking, and each of the electrodes 2 is connected, through an electrode pad 3 and by soldering 5, to a lead frame 4.

The humidity sensor of the present invention has features that adherence between the polyurethane resin on the surface of the porous sintered body and the porous sintered body is excellent and that deterioration of the humidity sensing characteristics is prevented owing to the presence of the polyurethane resin.

According to the present invention, there is provided a humidity sensor of which the humidity sensing characteristics change little even under an environment containing water and vapor water droplets, oil and oil steam, organic acids, inorganic corrosive gases, cigarette smokes, aldehydes, etc.

### EXAMPLES

The present invention will be explained hereinbelow by reference to Examples. Durability tests in the Examples were carried out as follows.

### (1) Water resistance test

(i) Immersing test
   A sensor sample was immersed in distilled water for 60 minutes, and then air-dried.
(ii) Water droplets spray test
   A humidifier was used to spary a sensor sample with mist-like water droplets for 30 minutes, and the spraying was stopped for 30 minutes. This procedure was repeated over 3 days.

### (2) Oil test

(i) A sensor sample was immersed in salad oil for 10 seconds, and the surface of the sample was lightly wiped with paper.
(ii) Steam test
   Salad oil was allowed to smoke at 200°C, and a sample sensor surface was exposed to the smoke.

### (3) Organic acid test

A sample sensor was placed under an atmosphere saturated with rice vinegar.

### (4) Inorganic corrosive gas test

A sample sensor was placed in an atmosphere containing 2,000 ppm of SO₂ or H₂S.

### (5) Cigarette smoke test

Three cigarettes were smoked in a 20-liter desiccator, and a sample sensor was placed therein.

### (6) Aldehyde test

A sample sensor was left to stand in a formaldehyde-saturated steam for 24 hours. In the following Examples, "%" stands for "% by weight".

### EXAMPLE 1

A powder was prepared by mixing TiO₂, CuO₂ and Na₂CO₃ in a mixing ratio of 10:2:1 (by weight), and 50 g of this powder was put into an automatic mortar. While the powder was mixed, 20 mℓ of 8 % polyvinyl alcohol aqueous solution as a binder was added gradually, and then the powder was sufficiently mixed for 45 minutes. The resultant mixture was then granulated in a 40 mesh sieve, and dried at 80°C for 1 hour. This raw material powder was molded under a pressure of 500 kg/cm² to form a disk-shaped body having a diameter of 7 mm and a thickness of 0.8 mm.

The disk-shaped body was sintered at 900°C for 3 hours to give a sintered body. A gold·platinum·paladium paste was printed on one surface of the porous sintered body and baked at 850°C for 10 minutes to form comb-like electrodes as shown in Figure 1. Then, lead frames were attached to the terminal pad portions of the electrodes, and soldered to give a humidity sensor.

The humidity sensor was immersed in a solution of a polymer of polytetramethylene glycol with tolylene diisosyanate (trade name: PC-110, supplied by Mitsubishi Chemical, Ltd.) in toluene (urethane concentration: 3 %) for 10 seconds, and preliminarily heated at 80°C for 10 minutes. Then, the humidity sensor was heated at 120°C for 30 minutes,

The above procedure was repeated to prepare the same humidity sensors as above for durability tests.

Table 1 shows the results of the durability tests of the above sensors treated with urethane resin and sensors treated with no urethane resin.

**Table 1**

| Test | | Resistance (kΩ) at 60% RH | | | |
|---|---|---|---|---|---|
| | | Sensors treated with urethane resin | | Sensors treated with no urethane resin | |
| | | before | after | before | after |
| (1) Water resisance test | | | | | |
| (i) | Immersing | 75 | 75 | 40 | 65 |
| (ii) | Water droplets spray | 90 | 98 | 40 | 50 |

| (2) Oil test | | | | | |
|---|---|---|---|---|---|
| (i) | Immersing | 90 | 90 | 39 | 51 |
| (ii) | Steam | 80 | 89 | 38 | 100 |

| (3) Organic acid test | | | | | |
|---|---|---|---|---|---|
| Rice vinegar | | 55 | 55 | 38 | 49 |

| (4) Inorganic corrosive gas test | | | | | |
|---|---|---|---|---|---|
| SO₂ gas (2,000 ppm) | | 94 | 95 | 39 | 90 |
| H₂S gas (2,000 ppm) | | 130 | 170 | 41 | 180 |
| (5) Cigarette smoke test | | 100 | 120 | 40 | 56 |
| (6) Aldehyde test | | 68 | 75 | 39 | 67 |

### EXAMPLE 2

Example 1 was repeated except that TiO₂, Sb₂O₃ and LiO₂ (weight ratio: 10:2:1) were used in place of TiO₂, Cu₂O and Na₂CO₃ (weight ratio 10:2:1) and that there was used a solution of a polymer of polytetramethylene glycol with tolylene diisocyanate (trade name: PC-110, supplied by Mitsubishi Chemical, Ltd.) in tetrahydrofuran (urethane concentration: 2.5 %) in place of that used in Example 1. Table 2 shows the results of the durability tests of the resultant sensors treated with urethane resin and sensors treated with no urethane resin.

**Table 2**

| Test | Resistance (kΩ) at 60% RH | | | |
|---|---|---|---|---|
| | Sensors treated with urethane resin | | Sensors treated with no urethane resin | |
| | before | after | before | after |
| (1) Water resisance test | | | | |
| Water droplets spray | 65 | 68 | 35 | 150 |

| (2) Oil test | | | | |
|---|---|---|---|---|
| Steam | 70 | 78 | 32 | 85 |

| (3) Organic acid test | | | | |
|---|---|---|---|---|
| Rice vinegar | 68 | 65 | 38 | 105 |

| (4) Inorganic corrosive gas test | | | | |
|---|---|---|---|---|
| SO₂ gas (2,000 ppm) | 72 | 70 | 30 | 78 |
| (5) Cigarette smoke test | 79 | 75 | 34 | 56 |
| (6) Aldehyde test | 67 | 75 | 28 | 59 |

### EXAMPLE 3

Example 1 was repeated except that Na₂TeO₃ was used in place of Na₂CO₃ and that there was used a solution of a polymer of a mixture of polytetramethylene glycol and polyethylene glycol with a mixture of dicyclohexamethane-4,4'-isocyanate and isophorone diisocyanate (trade name: PC-200, supplied by Mitsubishi Chemical, Ltd.) in dimethylformamide (urethane concentration: 4 %) in place of that used in Example 1. Table 3 shows the results of the durability tests of the resultant sensors treated with urethane resin and sensors treated with no urethane resin.

**Table 3**

| Test | Resistance (kΩ) at 60% RH | | | |
|---|---|---|---|---|
| | Sensors treated with urethane resin | | Sensors treated with no urethane resin | |
| | before | after | before | after |
| (1) Water resisance test | | | | |
| Water droplets spray | 55 | 58 | 45 | 170 |

| (2) Oil test | | | | |
|---|---|---|---|---|
| Steam | 60 | 68 | 42 | 95 |

| (3) Organic acid test | | | | |
|---|---|---|---|---|
| Rice vinegar | 48 | 55 | 43 | 145 |

| (4) Inorganic corrosive gas test | | | | |
|---|---|---|---|---|
| SO₂ gas (2,000 ppm) | 55 | 58 | 43 | 88 |
| (5) Cigarette smoke test | 59 | 55 | 44 | 66 |
| (6) Aldehyde test | 62 | 65 | 48 | 79 |

## Claims

1. A humidity sensor comprising a porous sintered body, electrodes and a film of an organic polymer covering said porous sintered body, characterized in that said porous sintered body and electrodes have a polyurethane resin formed on the whole surface and pores thereof.

2. A humidity sensor according to claim 1, wherein the polyurethane resin is a reaction product between a diisocyanate and a polyhydric alcohol.

3. A humidity sensor according to claim 1, wherein the porous sintered body is formed mainly of a metal oxide.

4. A process for the production of a humidity sensor according to claim 1, whereby a humidity sensor comprising a porous sintered body and electrodes is brought into contact with a solution of an organic polymer characterised in that said organic polymer is a polyurethane resin and that the whole surface and pores of said sensor are brought into contact with said solution.

5. A process according to claim 4, wherein the whole surface and pores of the humidity sensor comprising a porous sintered body and electrodes is brought into contact with the solution of a polyurethane resin by immersing the humidity sensor in the solution of a polyurethane resin or by spraying the humidity sensor with the solution of a polyurethane resin.

6. A process according to claim 4, wherein the solution of a polyurethane resin has a polyurethane concentration of 1 to 5% by weight.

7. A process according to claim 5, wherein the humidity sensor comprising a porous sintered body and electrodes is immersed in the solution of a polyurethane resin for not less than 10 seconds.

8. A process according to claim 4, wherein the porous sintered body is formed by sintering a metal oxide in air.

9. A process according to claim 4, wherein the porous sintered body is formed by sintering a mixture of a metal oxide with a metal salt in air.

## Patentansprüche

1. Feuchtigkeitssensor, umfassend einen porösen Sinterkörper, Elektroden und einen Film eines organischen Polymeren, der den Sinterkörper bedeckt, dadurch **gekennzeichnet,** daß der poröse Sinterkörper und die Elektroden ein auf der gesamten Oberfläche und den Poren davon gebildetes Polyurethanharz aufweisen.

2. Feuchtigkeitssensor nach Anspruch 1, dadurch **gekennzeichnet,** daß das Polyurethanharz ein Reaktionsprodukt zwischen einem Diisocyanat und einem mehrwertigen Alkohol ist.

3. Feuchtigkeitssensor nach Anspruch 1, dadurch **gekennzeichnet,** daß der poröse Sinterkörper hauptsächlich aus einem Metalloxid gebildet ist.

4. Verfahren zur Herstellung eines Feuchtigkeitssensors nach Anspruch 1, bei dem ein Feuchtigkeitssensor, umfassend einen porösen Sinterkörper und Elektroden, in Kontakt mit einer Lösung eines organischen Polymeren gebracht wird, dadurch **gekennzeichnet,** daß das organische Polymere ein Polyurethanharz ist und daß die gesamte Oberfläche und die Poren des Sensors mit der Lösung in Kontakt gebracht werden.

5. Verfahren nach Anspruch 4, dadurch **gekennzeichnet,** daß die gesamte Oberfläche und die Poren des Feuchtigkeitssensors, der einen porösen Sinterkörper und Elektroden umfaßt, in Kontakt mit der Lösung eines Polyurethanharzes gebracht wird, indem der Feuchtigkeitssensor in die Lösung eines Polyurethanharzes eingetaucht wird, oder indem der Feuchtigkeitssensor mit der Lösung eines Polyurethanharzes besprüht wird.

6. Verfahren nach Anspruch 4, dadurch **gekennzeichnet,** daß die Lösung eines Polyurethanharzes eine Polyurethankonzentration von 1 bis 5 Gew.-% hat.

7. Verfahren nach Anspruch 5, dadurch **gekennzeichnet,** daß der Feuchtigkeitssensor, der einen porösen Sinterkörper und Elektroden umfaßt, in die Lösung eines Polyurethanharzes nicht weniger als 10 Sekunden lang eingetaucht wird.

8. Verfahren nach Anspruch 4, dadurch **gekennzeichnet,** daß der poröse Sinterkörper durch Sintern eines Metalloxids in Luft gebildet wird.

9. Verfahren nach Anspruch 4, dadurch **gekennzeichnet,** daß der poröse Sinterkörper durch Sintern eines Gemisches eines Metalloxids mit einem Metallsalz in Luft gebildet wird.

## Revendications

1. Détecteur d'humidité comprenant un corps fritté poreux, des électrodes, et un film d'un polymère organique couvrant ledit corps fritté poreux, caractérisé en ce que ledit corps fritté poreux, et les électrodes comportent une résine polyuréthanne formée sur toute la surface et sur les pores de cette dernière.

2. Détecteur d'humidité selon la revendication 1, dans lequel la résine polyuréthanne est un produit de la réaction entre un diisocyanate et un alcool polyhydrique.

3. Détecteur d'humidité selon la revendication 1, dans lequel le corps fritté poreux est formé principalement d'un oxyde métallique.

4. Procédé pour la production d'un détecteur d'humidité selon la revendication 1, dans lequel un détecteur d'humidité comprenant un corps fritté poreux et des électrodes, est mis en contact avec une solution d'un polymère organique, caractérisé en ce que ledit polymère organique est une résine polyuréthanne, et en ce que la totalité de la surface et des pores dudit détecteur est mise en contact avec ladite solution.

5. Procédé selon la revendication 4, dans lequel la totalité de la surface et des pores du détecteur d'humidité, et les électrodes, sont mises en contact avec la solution d'une résine polyuréthanne, par immersion du détecteur d'humidité dans la solution d'une résine polyuréthane ou par vaporisation sur le détecteur d'humidité, de la solution de résine polyuréthanne.

6. Procédé selon la revendication 4, dans lequel la solution d'une résine polyuréthanne a une concentration en polyuréthanne, de 1 à 5 % en poids.

7. Procédé selon la revendication 5, dans lequel le détecteur d'humidité comprenant un corps fritté poreux, et des électrodes, est immergé dans la solution de résine polyuréthanne pendant pas moins de 10 secondes.

8. Procédé selon la revendication 4, dans lequel le corps fritté poreuxest formé par frittage d'un oxyde métallique, à l'air.

9. Procédé selon la revendication 4, dans lequel le corps fritté poreux est formé par frittage d'un mélange d'un oxyde métallique et d'un sel métallique, à l'air.
